(19) Europäisches Patentamt

European Patent Office

Office européen des brevets

(11) **EP 2 811 285 A1**

(12) **EUROPEAN PATENT APPLICATION**

(43) Date of publication:
**10.12.2014 Bulletin 2014/50**

(51) Int Cl.:
*G01N 21/35* (2014.01) *G01B 7/06* (2006.01)

(21) Application number: **13170240.9**

(22) Date of filing: **03.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Research Ltd.**
**8050 Zürich (CH)**

(72) Inventors:
• **Van Mechelen, Jacobus Lodevicus Martinus**
**8104 Regensdorf (CH)**
• **Clausen, Thomas**
**5707 Seengen (CH)**

(74) Representative: **ABB Patent Attorneys**
**c/o ABB Schweiz AG**
**Intellectual Property CH-IP**
**Brown Boveri Strasse 6**
**5400 Baden (CH)**

(54) **Sensor system and method for characterizing a multi-layered semiconductor material**

(57) A method of characterizing a multi-layered semiconductor material 2 by a plurality of quality parameters based on fitting to a physical model is provided. The multilayered semiconductor material has at least a first layer 2a and a second layer 2b, and the plurality of quality parameters include at least one of a first layer thickness of the first layer 2a and a second layer thickness of the second layer 2b. The method is carried out by a sensor system in a noncontact manner, the sensor system comprising an emitter system 10 for emitting THz radiation, a detector system 20 for detecting THz radiation, and a processing unit 30 operationally coupled to the emitter system and the detector system. The method is based on a full time trace analysis of the experimental time-domain reflectivity Er(t).

**FIG. 1**

**Description**

Aspects of the invention relate to a method for characterizing a multi-layered semiconductor material such as layer thickness, charge carrier density, charge carrier mobility and the like by a non-contact sensor system using THz radiation. Further aspects of the invention relate to a corresponding sensor system and to an apparatus for handling semiconductor material having such a sensor system.

Technical background:

Electronic apparatuses nowadays contain large amounts of semiconductor components mainly made of semiconducting elements, which are often intentionally doped with other elements for giving them desired characteristics. Although such semiconductor components can be made very reproducibly and almost fully automatically, quality control of the individual components is indispensable to meet the requirements of end applications.

This is illustrated by the power electronics industry where the performance of power devices like diodes and switches mainly depends on the properties of the silicon wafers and the deposited structures. Parameters which characterize these properties are the physical thickness of the substrate and the layers deposited on top, and electrical properties like charge carrier mobility, charge carrier density, dc resistivity and/or conductivity.

Conventionally, the inspection of semiconductors is done on wafers which are randomly selected from the batch. Electrical connections are made to investigate the electrical properties of the wafer. More recent technologies use infrared or microwave radiation. Disadvantages of the electric technique are that it is a contact method and accurate determination of the individual layers of a multilayer structure is challenging. Both the electrical and current optical techniques lack sufficient accuracy when the multilayer structure contains thin layers, low doping concentrations or small doping concentration differences between the layers.

Common obstacles of known methods of characterizing semiconductor material are: Restriction to uniform (single-layer) semiconductors; necessity of inputting the layer thickness; presence of magnetic fields, which complicates the quality control system and process; low accuracy; and/or necessity of physically contacting the material.

US 2001/029436 Al discloses a method for semiconductor electrical characteristics evaluation. According to this method, an electrical characteristics parameter of the semiconductor material is calculated based upon a spectral transmittance or spectral reflectance. However, this method only relates to a uniform material and only allows obtaining a uniform electrical characteristic of the material.

DE 102010021476 Al discloses a method to determine a thickness, length or position using continuous THz radiation, using a look-up table that relates phase changes to the thickness of the material. Also this document only relates to uniform material.

Thus, there is a need of obtaining more accurate and meaningful information for a broad range of semiconductor materials.

Summary of the invention

In view of the above, a method according to claim 1, a sensor system according to claim 14, and an apparatus according to claim 15 are provided.

According to a first aspect, a method of characterizing a multi-layered semiconductor material by a plurality of quality parameters based on fitting to a physical model is provided. Therein, the multi-layered semiconductor material has at least a first layer and a second layer, and the plurality of quality parameters include at least one of a first layer thickness of the first layer and a second layer thickness of the second layer. The method is carried out by a sensor system in a non-contact manner, the sensor system comprising an emitter system for emitting THz radiation, a detector system for detecting THz radiation, and a processing unit operationally coupled to the emitter system and the detector system. The method comprises: emitting, by the emitter system, a THz radiation signal towards the semiconductor material such that the THz radiation interacts with the semiconductor material; detecting, by the detector system, a response signal being the detected THz radiation signal having interacted with the semiconductor material; determining model parameters of the physical model by optimizing the model parameters such that a predicted response signal of the physical model is fitted to the detected response signal, the model parameters being indicative of optical properties of the first layer describing the interaction of the THz radiation signal with the first layer and of optical properties of the second layer describing the interaction of the THz radiation signal with the second layer; and determining, from the determined model parameters, the quality parameters.

According to a second aspect, a sensor system for characterizing a semiconductor material is provided. The sensor system comprises: a holder for the semiconductor material; an emitter system for emitting THz radiation towards the semiconductor material held by the holder; a detector system for detecting THz radiation coming from the semiconductor material held by the holder; and a processing unit operationally coupled to the emitter system and the detector system. The sensor system is configured for characterizing a semiconductor material by any method described herein.

The sensor assembly and method according to embodiments of the invention allow for obtaining an accurate and meaningful set of quality parameters reliably. This is achieved by making use of a large amount of information from the detected THz radiation response of the semiconductor material, by fitting the predicted response of a physical model to the detected THz response signal. Thereby, preferably the entire time trace of the detected THz radiation signal is used for the fitting (e.g. by using an error function that is responsive to any deviation between predicted and measured response). By using the entire time trace, the method is extremely sensitive even with respect to small reflected partial waves, and therefore allows for the determination of individual layer parameters even if the optical contrast between the layers is very small. Thereby, quality parameters can be obtained reliably even for multilayer structures with a plurality of layers of small optical contrast. Moreover, the analysis method is able to obtain layer thickness(es) from the detected THz response signal, and therefore does not need the layer thickness as additional input.

More particularly, a method and system is provided which allows the concurrent determination of geometrical parameters (e.g. thickness of individual layers) and optionally also electrical parameters (e.g. charge carrier concentration and/or mobility of individual layers) that characterize a semiconductor multilayer structure. Preferably, these parameters can be determined for each separate layer from a single measurement.

An advantage of the THz radiation is that the (possibly doped) layers of semiconducting material are typically at least partially transparent to THz radiation, so that depth information is obtained. Further, the THz radiation interacts, e.g., with free charge carriers and thereby directly probes the physics of the semiconductor layers.

Further, performing quality control on semiconductors with THz radiation also has the following additional advantage compared to other frequency ranges like the infrared and visible part of the spectrum: The THz range (0.01-10 THz) corresponds to frequencies which precisely match the typical range of scattering rates of charge carriers in doped semiconductors. Therefore, the absorption of charge carriers, which is centered around zero frequency, is always fully covered by the emitted radiation and its frequency dependence can therefore be measured to high accuracy. Thereby, the use of THz radiation allows determining the spectral shape of the charge-carrier absorption curve to high accuracy. Knowledge of this information allows for obtaining the quality parameters related to the charge carriers to high accuracy, as described herein.

Further advantages, features, aspects and details that can be combined with embodiments described herein are evident from the dependent claims, the description and the drawings.

Brief description of the Figures:

The details will be described in the following with reference to the figures, wherein

Fig. 1              is a schematic side view of a sensor system according to an embodiment of the invention;

Figs. 2a and 2b    are schematic side views of possible further details and variants of the sensor system of Fig. 1;

Fig. 3              is a schematic view illustrating the interaction of THz radiation emitted by a sensor system according to an embodiment of the invention with multi-layered semiconductor material;

Fig. 4              is a block diagram illustrating a method of characterizing a multi-layered semiconductor material according to an embodiment of the invention;

Figs. 5 and 6       are diagrams representing an emitted THz signal together with corresponding response signals representing the THz radiation having interacted with semiconductor material in time domain;

Fig. 7              is a diagram representing the detected THz response signals of Fig. 6 in frequency domain;

Fig. 8              is a diagram representing the frequency-dependent conductivities of individual layers of a multi-layered semiconductor material of Fig. 6; and

Fig. 9              is a diagram comparing the thickness of epitaxial layers determined according to an embodiment of the invention to the rated thickness of the layers.

Detailed description of aspects of the invention

In the following, some more general aspects of the invention are described. Unless explicitly stated otherwise, the aspects are independent of each other and can be combined in any manner. For example, any aspect or embodiment described in this document can be combined with any other aspect or embodiment.

First, some general aspects are described. According to an aspect of the invention, the method is carried out by a sensor system in a non-contact manner i.e. without any sensor component requiring direct physical contact with the semiconductor material. This does not exclude a holder holding the semiconductor material, or any further sensor component other than the THz emitter and receiver having contact with the semiconductor material.

The method is based on a full time trace analysis of the experimental time-domain reflectivity Er(t). This makes the method extremely sensitive and allows for the determination of individual layer parameters even though the optical contrast between the layers is very small.

According to a further aspect, the semiconductor material quality parameters further include at least one of a thickness, a charge carrier concentration, a charge carrier mobility, and a charge carrier scattering rate, of at least one of the layers of the semiconductor material. Preferably, the semiconductor material quality parameters include at least one of these parameters for at least two or even at least three of the layers.

According to a further aspect, a plurality of the semiconductor material quality parameters, and preferably all of the quality parameters, are obtained coincidentally, using a measurement from the same data source(s), the data source(s) including the THz receiver.

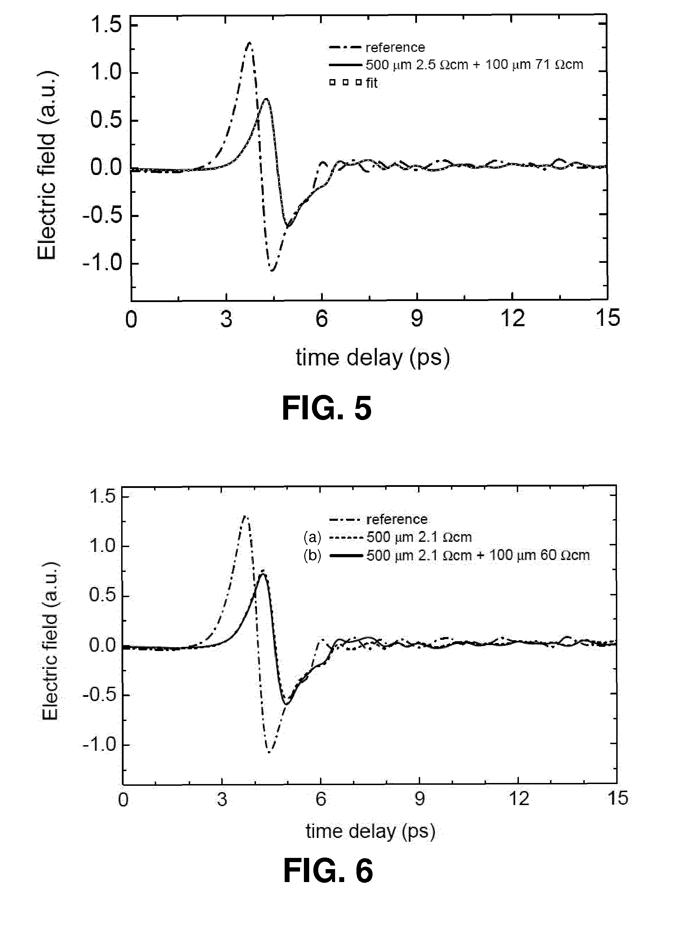

Preferably, a single measured waveform or spectrum is used for determining the plurality of quality parameters. In other words, a plurality and preferably all of the quality parameters are determined from a single response signal. Herein, for example the waveforms of Figs. 5-7 are understood as a single measured waveform, even if the waveforms are generated from multiple THz pulses. A single measured waveform is understood to be a single curve of continuous time-or frequency-dependence. Normally, a single waveform contains sufficient information for determining the quality parameters of as many layers as is necessary (as are present). In the exceptional case that a single waveform should not contain sufficient information for determining the best-fit response and thereby all quality parameters reliably (e.g. because the mathematical problem is underdetermined), a plurality of waveforms corresponding to different emitted THz signal waveforms (reference waveforms) may be used and optimized simultaneously.

According to a further aspect, the model parameters are determined using the entire detected response signal (essentially all data points of the detected THz radiation signal). Thus, essentially all data points of the response are input and used in the calculation of the model parameters, in the sense that a variation in any one of the data points influences the result at least in a minimal manner (not taking into account rounding or truncating of numbers).

According to an aspect, the method is performed without applying a magnetic field and/or without contacting the semiconductor material electrically.

According to a further aspect, the quality parameters may be obtained as a function of temperature. To this purpose, the sample holder comprises a heating and/or cooling arrangement for adjusting the temperature of the semiconductor material. In accordance with this aspect, the temperature of the sample material is adjusted to different values and the quality parameters are determined at the different temperatures. Thereby, information about the temperature dependence of these quality parameters is obtained. This method is particularly interesting for the quality parameters relating to the charge carriers, such as charge carrier density and/or charge carrier mobility, since the properties of the charge carriers vary with temperature in a manner that is characteristic of the charge carriers. The temperature gradient of any of the semiconductor material quality parameters mentioned herein is itself also considered as a semiconductor material quality parameter.

Next, some aspects relating to the semiconductor material are described in more detail. The semiconductor material is multi-layered, i.e. has at least two layers. In most embodiments described herein, the semiconductor material has two layers, but the invention also applies to the case of more layers, e.g. three or four layers. According to an aspect, the number of layers is eight or less. The layers are arranged, in thickness direction of the semiconductor material, on top of one another. Hence, the invention is particularly suitable for characterizing semiconductor substrates on which thin (less than 200 $\mu$m thick) epitaxial layers have been grown.

According to optional aspects, the semiconductor material has at least three or even at least four layers. The layers mainly (up to at least 90 wt% or even up to at least 99 wt%) made of semiconducting element(s), especially binary group II-VI, III-V, IV-IV elements such as ZnS, BeTe, CdSe, GaAs, AIN, Si, Ge, InP and ternary, tertiary and higher order combinations thereof, and may be doped with other elements, primarily from group II, III, IV, V and/or VIsuch as aluminum, boron, gallium, phosphorous, arsenic.. The dopant concentration is in a range of above unavoidable impurities, i.e. the dopant is intentionally added, and up to a concentration which does not alter the doping-free crystal structure significantly. According to an aspect, the dopant concentration is at least $10^{10}$ cm$^{-3}$ for P:Si but may go down to $10^8$ for Fe:GaAs Typical dopant concentrations are in the range between $10^{13}$ cm$^{-3}$ and $10^{18}$ cm$^{-3}$.

The layers may differ in the basic semiconducting element(s), or in dopant, or both, with respect to element composition and/or concentration of individual element(s). For example, in the case of two layers, both layers may comprise the same basic semiconductor element, and one layer may be doped and the other layer may be undoped or doped by different dopant(s) or using a different dopant concentration. The method is reliable even in case of very small optical contrast between the layers (i.e. very small difference in index of refraction and / or very small thickness of one or more of the layers).

Next, some aspects relating to the algorithm for finding the predicted response are described in more detail. The algorithm is based on a physical model, i.e. a function outputting a predicted response signal based on model parameters as input variables. In addition, the reference signal and possibly other data such as measured temperature or other variables are input into the physical model as additional input variables. The physical model is based on physical considerations.

The model parameters may include quantities of interest such as the index of refraction or a parameterization thereof. Further details regarding the model parameters are given below.

According to an aspect, the model parameters of the physical model are determined by optimizing the model parameters such that a predicted response signal of the physical model is fitted to the detected response signal. The algorithm includes the following input data: a reference waveform (in time domain) or reference spectrum (in frequency domain) or some other signal sequence describing the emitted THz radiation signal not having interacted with the semiconductor material, and the detected response. In addition, other parameters characterizing the semiconductor material may be inputted, such as known doping concentrations, known thickness of some layers if available (e.g. of the substrate layer), semiconductor material temperature etc. Likewise, other parameters characterizing the ambient medium may be inputted, such as an ambient moisture and / or a temperature.

Preferably, an iterative algorithm is used. The iterative algorithm includes the following steps: (a) calculating a simulated (predicted) response based on the physical model using an initial guess for the model parameters; (b) calculating an error function expressing a deviation between the predicted response and the detected response; (c) iterating steps (a) and (b), whereby instead of the initial guess in step (a) the model parameters are updated in order to reduce the error function. These steps (a) and (b) are iterated until the error function satisfies a best-fit criterion. Finally, (d) obtaining the fitted parameters as the final parameters satisfying the best-fit criterion in step (c). Then, at least some of the quality parameters (e.g. thickness, charge carrier concentration) are calculated from the fitted model parameters.

The semiconductor material quality parameters are thus determined by calculating a best-fit response as a function of the model parameters, such that the best-fit response satisfies a predetermined best-fit criterion for an error function expressing a deviation between the predicted response and the detected response. The best-fit criterion may include a minimization criterion for the error function.

The error function may include, e.g., the $L^2$ norm of the difference between the predicted response signal and the measured response signal. Possibly, additional terms may be added to the $L^2$ norm as described below. According to a particular aspect, the error function has a frequency dependent sensitivity. Hence, a particular difference between the frequency-domain predicted response signal and the frequency-domain measured response signal may lead to an error function whose magnitude depends on the frequency at which the difference occurs.

Once the model parameters are determined, at least some of the semiconductor material quality parameters are then calculated from the model parameters.

The iterative best-fit algorithm as described herein ensures a reliable analysis that takes into account the entire information contained in the detected THz radiation signal. Therefore, the result is robust even in case of very weak optical contrast between the layers, because is based on a large number of data points (entire measured response signal). Further, this approach allows the result to be consistent with a realistic understanding of the underlying physical phenomena present in the semiconductor material.

Next, some aspects regarding the model parameters of the physical model are described in more detail. The model parameters are indicative of optical properties of the respective layers describing the interaction of the THz radiation signal with the respective layers, and thereby allow calculation of a predicted response signal using the physical model. Also, once the best-fit model parameters are determined, the model parameters allow calculation of the quality parameters.

The model parameters may include, for example, the index of refraction, conductivity, indices of transmission and reflection, and/or parameterizations thereof, e.g. the conductivity. Other possible model parameters include the transmission and/or reflection coefficients themselves.

The choice of these model parameters is advantageous because they allow for calculating at least some of the semiconductor material quality parameters relatively straightforwardly. At the same time, these model parameters are directly linked to transmission and/or reflection coefficients via the Fresnel equations (see Eq. (2)), and thereby to the detected response of the THz signal having interacted with the semiconductor material. Thus, a good and robust model of the response of the THz signal having interacted with the semiconductor material is enabled.

Preferably, the physical model and the model parameters enable a parameterization of the index of refraction and / or of the transmission and reflection coefficients such that these quantities have a frequency dependence (e.g. by describing a resonance contributing to the index of refraction). In an example, a frequency dependence can be obtained by expressing the transmission and/or reflection coefficients in terms of a frequency-dependent index of refraction of each layer. The frequency-dependent parameterization is preferably based on physical considerations. Preferably, the model parameters allow the index of refraction and / or of the transmission and reflection coefficients to be expressed as complex numbers, i.e. they allow a non-zero imaginary part of these quantities.

In the following, possible model parameters for parameterizing a frequency-dependent index of refraction *n(f)*, *f* being frequency, are given by means of example. Namely, the functional form of *n(f)* may be expressed using the following parameterization that approximates the expected frequency dependence:

$$n(f)^2 = n_0^2 + \sum_k n_k^2 * p_k(f) \tag{1}$$

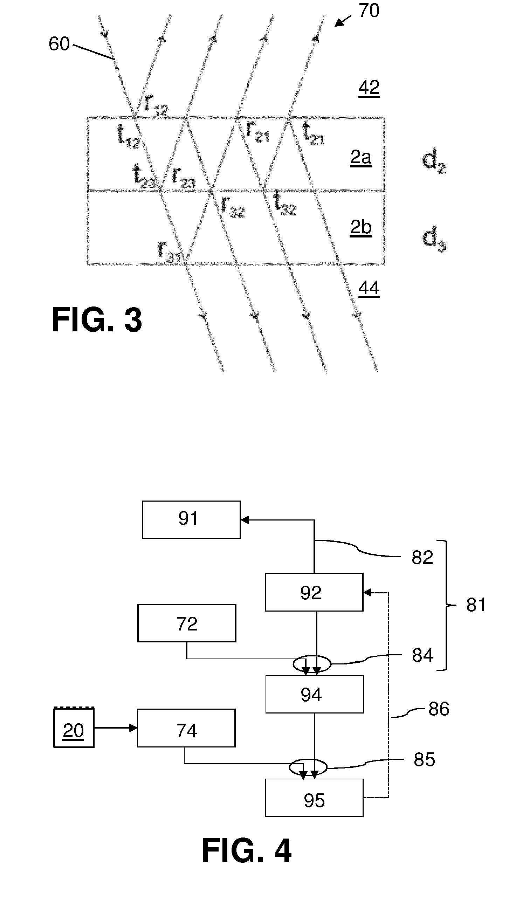

Herein, k=1..N is an index (N being a natural number, e.g. N=1), and *no, $n_k$,* are the model parameters, and $p_k(f)$ is a frequency dependent function that represents physical phenomena in semiconductor material. The parameterization of equations has not only the advantage of approximating the expected form of an index of refraction of a semiconductor layer well, but also allows for a physical interpretation of the frequency-dependency being caused by physically relevant modes in the semiconductor material, e.g. free-carrier absorption modes. Specific examples of a functional form of *pk(f)* are given below, see the description of Fig. 4.

In a variation of this example, any other parameterisation of n(f) or some other parameter indicative of optical properties of the respective layer can be used as well. Another advantageous parameterisation is, for example, a parameterization of the free-carrier conductivity $\sigma_1$ which is proportional to $f*n(f)^2$, the conductivity being given by $\varepsilon = n^2 = 1 + i*\sigma_1 / (\varepsilon_0 * f)$.

Next, some aspects relating to the emitted THz radiation signal and the received (analyzed) THz radiation signal are described in more detail. Herein, THz radiation is defined as electromagnetic radiation of (i.e. including a non-negligible signal component having) a frequency in the range of 0.01-10 THz. The detected signal (e.g. time-domain waveform or frequency-domain spectrum of the detected THz radiation) is also referred to as the response signal.

According an aspect, the emitted THz radiation signal is a broadband signal having a frequency width of at least the frequency width $w_{fc}$ of the free-carrier absorption of at least one of the first layer and the second layer. According to a further aspect, the emitted THz radiation signal is a radiation pulse having a length in time domain of at most $1/w_{fc}$. Herein, the width of a signal or of an absorption curve is defined as its half-width in frequency domain.

The emitted/received THz radiation signal may be a continuous signal, a THz pulse or partial THz pulse. Herein, a partial pulse or partial wave is defined as partially - in amplitude - reflected or transmitted portions of the emitted pulse / wave: For example, each of the lines corresponding to a portions of the response signal 70 in Fig. 3 indicates a partial pulse / wave.

According to a further aspect, the quality parameters are obtained by analyzing a time-domain waveform of the response signal or by analyzing a frequency-domain spectrum of the response signal. According to a preferred aspect, the quality parameters are obtained by analyzing both the time-domain waveform and the frequency-domain spectrum of the response signal.

Next, some aspects relating to further input data are described in more detail. According to a further aspect, the sensor system further comprises an air moisture sensor and / or a temperature sensor operationally coupled to the processing unit, wherein the method further comprises obtaining an ambient air moisture value from the air moisture sensor obtaining a temperature value from the temperature sensor, and inputting the obtained temperature value and / or the ambient air moisture value in the processing unit.

Next, some aspects relating to the geometrical arrangement of the sensor apparatus are described in more detail. According to an aspect, the emitter system and the detector system may be arranged on the same side of the semiconductor material. Optionally, the sensor system may comprise a back-side THz reflector arranged on the other side of the semiconductor material. However, even without a back-side THz reflector, the signal from partial reflections at various layer boundaries may be sufficiently strong for allowing reliable detection and data analysis, hence the reflector can also be omitted.

Generally, it is preferred (but not required) that the emitter system and the detector system are arranged such that the THz radiation impinges on the substrate in a direction normal to the substrate surface. For example, according to an aspect, the sensor system may comprise a semitransparent THz reflector as beam splitter. The beam splitter may be arranged at an angle with respect to the semiconductor material sheet, such that an optical path from the emitter system and an optical path to the detector system are guided to/from a common optical path that is substantially perpendicular to the semiconductor material. As a result, the emitter system and the detector system are arranged for respectively emitting and detecting light rays having a right angle of incidence with respect to the semiconductor material.

Other arrangements are possible as well. For example, the emitter system and the detector system can be arranged on opposite sides of the semiconductor material for performing a transmission measurement.

The invention is also directed to systems for performing the methods described herein. According to an aspect, the sensor system comprises an emitter system for emitting THz radiation, a detector system for detecting THz radiation, and a processing unit operationally coupled to the emitter system and the detector system, and is configured for determining the plurality of semiconductor material quality parameters by the method according to any aspect described herein. Herein, the term "configured for" includes that the processing unit is equipped and programmed to this effect. For this purpose, a memory of the processing unit may be equipped with program code for causing a processor of the processing unit to execute the method according to any aspect described herein.

Next, some aspects relating to the integration into semiconductor processing are described in more detail. According to an aspect, a semiconductor material processing step is performed on the semiconductor material using as a process parameter at least one of the quality parameters determined by a method/system disclosed herein (e.g. the first and/or second layer thickness). The material processing step may be, e.g. an etching step or the like. In similar manner, the Invention can be used for on-line, in-line, at-line and off-line quality control methods and apparatuses. A material processing step may, in particular, be adapted depending on the determined quality parameter.

According to an aspect of the invention, contamination control can be performed by calculation a deviation of the determined quality parameters, such as thickness, charge carrier density charge carrier mobility, and/or temperature dependence of any of these values, from a corresponding reference value or reference range. If the deviation is too large, process parameters may be adapted or the semiconductor material may be removed. This allows eliminating contaminated material at an early stage of processing.

Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

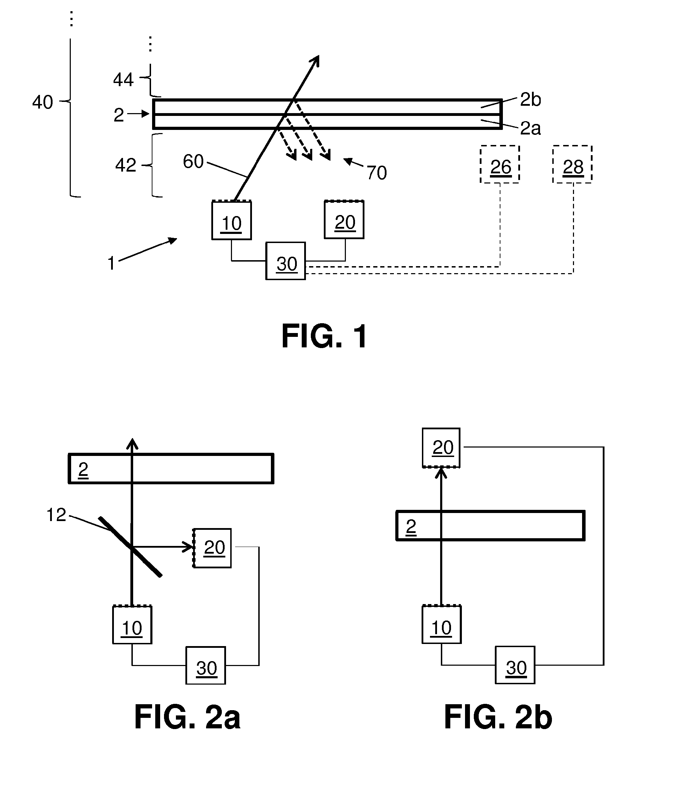

Fig. 1 is a schematic side view of a sensor system 1 according to an embodiment of the invention. The sensor system 1 has an emitter system 10 for emitting THz radiation, a detector system 20 for detecting THz radiation, and a processing unit 30 operationally coupled to the emitter system 10 and the detector system 20. In addition, Fig. 1 shows optional additional sensors 26 and 28, e.g. an optional thickness measurement device 26 and an optional humidity measurement device 28, which are operationally coupled to the processing unit 30. Herein, "operationally coupled" includes an interface of the processing unit coupled to the emitter system for triggering emission of THz radiation and an interface of the processing unit coupled to the detector system for receiving measurement data indicative of the response signal.

Further, a semiconductor material 2 is arranged such that the semiconductor material 2 is faced by the emitter system 10 and the detector system 20, with an air gap 42 between the emitter, detector systems 10, 20 and the semiconductor material 2, and with an air gap 44 on the other side of the semiconductor material 2. The semiconductor material 2 is multi-layered, i.e. includes at least two layers. In Fig. 1, two layers 2a and 2b (e.g. substrate layer and a coating layer) are shown by means of illustration.

Fig. 1 also shows the path of a THz radiation signal 60 emitted from the emitter system 10. The THz radiation signal 60 (solid line) traverses the air gap 42 and the semiconductor material 2. The THz radiation signal is partially reflected at each layer interface (i.e. interacts with the semiconductor material 2), such that reflected portions (dashed lines) propagate back through the air gap 42 and towards the THz detector system 20, and are detected thereby.

Fig. 3 shows the interaction of the THz radiation with the semiconductor material 2 in more detail: At each interface of layers 2a, 2b - either with another layer or with the surrounding medium - a portion of the THz radiation is reflected, and a portion is transmitted. The reflected and transmitted portion is expressed by the complex reflection coefficients $r_{ij}$ and the complex transmission coefficients $t_{ij}$, respectively. Here, the indices ij indicate the boundaries between layers i and j, layer 2a being indicated by i,j=2, layer 2b by i,j=3 and surrounding medium 42, 44 by i,j=1.

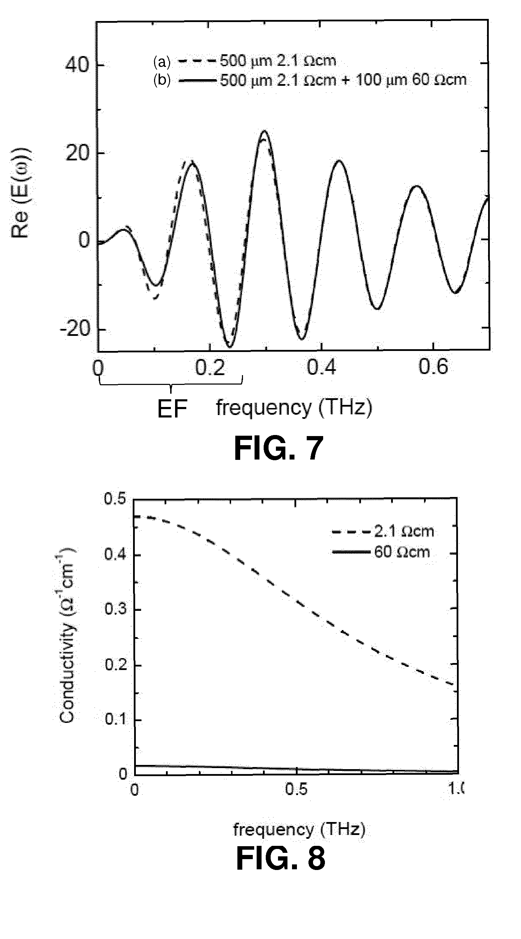

The interaction of the electromagnetic radiation with this multilayer stack (air gaps 42, 44, semiconductor material 2 having layers 2a, 2b) creates a complex pattern of reflected and transmitted signals. A portion of this THz radiation having interacted with the semiconductor material 2 is detected by the detector system 20. This detected radiation, more precisely the set of data points representing the detected radiation (e.g. represented as a time-domain curve as shown in Figs. 5 and 6 or as a frequency-domain curve as shown in Fig. 7), is also referred to as the THz response signal 70.

The interaction of light with the multilayer structure is pictured above and can be described by the Fresnel equations. For a thin film (refractive index $n_2$, thickness $d_2$) on a substrate (refractive index $n_3$, thickness $d_3$) in air (refractive index $n_1$=1), the reflected total electric field $E_r$ can be written as a series of the partial rays:

$$E_r = E_0 \left(r_{12} + t_{12}r_{23}t_{21}e^{-i2\beta} + t_{12}r_{23}r_{21}r_{23}t_{21}e^{-i4\beta} + \dots \right.$$
$$\left. \dots + t_{12}t_{23}r_{31}t_{32}t_{21}e^{-i2\gamma} + t_{12}r_{23}r_{21}r_{23}r_{21}r_{23}t_{21}e^{-i6\beta} + \dots \right) \qquad (2)$$

Herein, assuming normal incidence of the radiation, the indices of transmission and reflection $t_{ij}$ and $r_{ij}$ and the phase shifts $\beta$ and $\gamma$ can be expressed as follows:

$$t_{ij} = \frac{2n_i}{n_i + n_j} \qquad\qquad r_{ij} = \frac{n_i - n_j}{n_i + n_j} \qquad\qquad (3)$$

$$\beta = \frac{2\pi}{\lambda}d_2n_2 \qquad\qquad \gamma = \frac{2\pi}{\lambda}(d_2n_2 + d_3n_3)$$

with $\lambda$ the wavelength of the incident light, and $n_i$ and $d_i$ being the (complex and possibly frequency-dependent) index of refraction and thickness of the respective i-th layer (or air) as described above.

The processing section 30 (see Fig. 1) receives the response waveform (THz radiation response) 70, and also receives, or has stored therein, the waveform 60 emitted by the emitter. The processing section 30 then performs an analysis of the response waveform (taking into account the original waveform and other information such as detected moisture and/or temperature), and thereby obtains the quality parameters by the method described herein (see e.g. the description of Fig. 4 for additional details).

In Figs. 1 and 3, the radiation is shown to propagate along an angle with respect to the normal direction of the semiconductor material 2. This direction of propagation is mainly for illustration purposes, because it allows for visually separating the incoming and reflected THz radiation. In the actual setup, the main direction of propagation of the THz radiation preferably impinges normally on the semiconductor material, as shown in Figs. 2a and 2b below, so that the transmitted and received THz signals are collinear and normal to the surface of the semiconductor material 2. In this manner, a maximum portion of the reflected signals in captured by the detector, and the reflection is minimally influenced by the geometry of the setup. Throughout the description, normal incidence is assumed, although the respective formulae can be generalized to non-normal incidence in a straightforward manner by using the Fresnel equations for non-normal incidence instead of Eq. (2).

Figs. 2a and 2b are schematic side views of possible further details of possible implementations or variants of the sensor system of Fig. 1. In Fig. 2a, the emitter system 10 and the detector system 20 are arranged with their axes at an angle (here: 90°), and a beam splitter 12 is arranged such as to co-align the axes, so that the transmitted and received THz signals are collinear and normal to the surface of the semiconductor material 2.

In Fig. 2b, the emitter system 10 and the detector system 20 are arranged on opposite sides of the semiconductor material 2 with their optical axis (direct line between them) being substantially orthogonal to the semiconductor material 2. In this manner, a simple transmission measurement is performed instead of the measurement of the embodiment of Fig. 1.

The resulting waveform of the THz radiation response 70 is influenced by each layer's thickness and optical properties. In particular, the intensity of each partially reflected beam portion depends on a number of transmission and reflection coefficients, and their time difference (i.e. time difference of the partially reflected beam portion with respect to the emitted beam) depends on the optical layer thickness, as illustrated in Fig. 3. Hence, the full radiation response 70, together with a reference signal corresponding to the emitted THz signal 60 not having interacted with the semiconductor material, contains sufficient information for the determination of layer thicknesses d2 and d3 of the layers 2a and 2b shown in Fig. 3, and of other quality parameters of the semiconductor material.

In the following, specific aspects of the iterative algorithm for obtaining layer thickness and other quality parameters are described. The inventors have found that a stable and reliable algorithm is obtained by determining the semiconductor material quality parameters using a physical model. Here, the quality parameters include at least one layer thickness of the multi-layered semiconductor material. For definiteness, the method is illustrated for the following quality parameters: layer thickness d2, d3 (collectively labeled as d); and other quality parameters that can be expressed in terms of the frequency-dependent index of refraction $n(f)$ of each layer (e.g. the charge carrier concentration). The discussion herein can be adapted to the case of determining a single layer thickness or more than two layer thicknesses of a multi-layered semiconductor material.

This algorithm is illustrated in the block diagram of Fig. 4 in more detail. This algorithm is based on a physical (optical) model 81. The physical model 81 includes a waveform-prediction map 84 that maps the model parameters 92 as input to a predicted waveform 94 as output. Further, the model 81 includes a quality-parameter map 82 that maps the model parameters 92 as input to the semiconductor material quality parameters 91 as output. Herein, the model parameters 92 are, for example, a parameterization of the index of refraction n(f) and the thickness d for each layer; and the predicted waveform 94 is, for example, a predicted form of the response signal 70 shown in Figs. 3b, 3c.

In the following, an example of the waveform-prediction map 84 is described in more detail. As stated above, the waveform-prediction map 84 takes the model parameters 92 as input and outputs a predicted waveform 94. Here, the model parameters are the thickness d for each layer (i.e. in the example thicknesses d2, d3), and a parameterization of the frequency-dependent index of refraction n(f) for each layer.

In the following, preferred aspects of the parameterization of the index of refraction n(f) are described that can be used independently of the given embodiment. The parameterization of the index of refraction is such that the index of refraction has a dependence on frequency, wherein the index of refraction preferably has the form of Eq. (1) above. Preferably, the index of refraction includes a frequency-dependent contribution describing a resonance, and the frequency-dependent contribution is particularly preferably expressable as a function $p_k(f)$ proportional to

$$\omega_{p,1}{}^2 / (-\omega^2 - i\gamma_1\omega),$$

wherein $\omega$ is the frequency, $\omega_{p,1}$ is a plasma frequency, $\gamma_1$ is a damping coefficient, and i is the imaginary unit.

Optionally there are other frequency-dependent contributions / summands, e.g. contributions from other oscillators having a frequency-dependent factor $\omega_p{}^2 / (\omega_0{}^2 - \omega^2 - i\gamma\omega)$, wherein $\omega_0$ is an oscillator frequency.

For example, a possible parameterization of the (squared) index of refraction is

$$n(\omega)^2 = \epsilon(\omega) = \epsilon_\infty + \sum_{i=1}^{n} \frac{\omega_{p,i}^2}{\omega_{0,i}^2 - \omega^2 - i\gamma_i\,\omega} \tag{4}$$

where $\epsilon_\infty$ is the dielectric constant at high frequencies, and $\omega_0$ the oscillator frequency. A doped semiconductor can be expressed, for example, by one or two oscillators: One oscillator for the free carrier absorption (for which $\omega_0 = 0$); and optionally another oscillator for the lattice vibrations.

The parameterization as described above is used for each of the layers. Hence, the model parameters in this case are the adjustable parameters in Eq. (4) and the thickness d, for each of the layers. Thus, for example, in the case of layers each being modelled by just one oscillator representing the free-carrier oscillations of the layer (i.e. with $\omega_0 = 0$), the model parameters for each layer are d, $\epsilon_\infty$, $\omega_{p,1}$ and $\gamma_1$, and the index of refraction is obtained via Eq. (4) with counter n=1 and $\omega_{0,1}{}^2 = 0$.

From the thickness d and such a parameterization of the index of refraction n(f), the transmission and/or reflection coefficients can be obtained via Fresnel equations. In the example of the semiconductor material 2 shown in Fig. 3, the reflection and transmission coefficients $r_{ij}$, $t_{ij}$ at the interfaces of the layers 2a, 2b are, for example, given in Eq. (3) above.

The waveform-prediction map 84 further includes a set of optics equations for calculating a predicted response (predicted waveform for the response signal 70) 94. These optics equations may, for example, be expressed by Eq. (2) above. The optics equations have the following input parameters: (i) the waveform $E_0$ of the emitted THz radiation signal 72 (i.e. waveform of emitted radiation 60 of Figs. 1 and 3), and (ii) the reflection and transmission coefficients ($r_{ij}$, $t_{ij}$) and the phase shifts $\beta$, $\gamma$ from Eq. (2). Other input parameters may be included as well.

The algorithm further includes an error function 85 that expresses a deviation 95 between the predicted response 94 on the one hand and the detected response 74 (waveform of the detected radiation 70 of Figs. 1, 3) on the other hand. This error function 85 may, for example, be the $L^2$ norm or some other norm as described herein.

Possibly, according to a general aspect of the error function independently of this embodiment, the error function may, include a "penalty term" that penalizes a physically implausible predicted response; and/or a frequency-dependent term that give additional weight to deviations in a particularly sensitive frequency range. Such a sensitive frequency range may include the frequency range between 0.01 THz and 1 THz at least partially. Such a term may, for example, be added to other contributions such as the $L^2$ norm.

According to a particular aspect, the error function has a frequency dependent sensitivity. Hence, a particular difference between the frequency-domain predicted response signal and the frequency-domain measured response signal may lead to an error function whose magnitude depends on the frequency at which the difference occurs.

Next, the quality-parameter map 82 is described in more detail. As stated above, the quality-parameter map 82 calculates, from the model parameters 92, the semiconductor material quality parameters 91 as output. In the example described above, some quality parameters of the semiconductor material may be obtained from the above parameterization of n(f) as follows:

The charge carrier density N is dependent on the plasma frequency $\omega_p$, which is a fit parameter, via

$$N = \frac{\omega_p^2 \, m^* \, \epsilon_0}{e^2}$$

Here, m* is the optical effective mass of the charge carriers, e is the free electron charge, and $\epsilon_0$ is the permittivity of vacuum.

The charge carrier mobility $\mu$ is inversely proportional to the damping coefficient (scattering rate) which is also a direct fit parameter:

$$\mu = \frac{e}{\gamma m^*}$$

The thickness d was already used as a fit parameter and is identically used as quality parameter. In this manner, the quality parameters N, $\mu$ and d are obtained.

Next, the iterative algorithm itself, as illustrated in Fig. 4, is described in more detail. In a first step, initial fit parameters 92 are generated, e.g. as random numbers or plausible initial values. In this example, as stated above, the fit parameters are given by the respective thickness and parameters characterizing the respective index of refraction of each layer.

Then, the initial fit parameters 92 are input, together with the reference waveform 72, into the waveform-prediction map 84; and the waveform-prediction map 84 calculates the predicted (simulated) response 94 using this input. Namely, the indices of refraction and transmission and phase shifts are calculated via the Fresnel equations, Eq. (3), and the predicted response 94 is calculated based on these coefficients using the optics equations, Eq. (2), as described above.

Then, the deviation 95 between the predicted response 94 and the measured response 74 is calculated using the error function 85. Then the model parameters 92 are varied depending on the coefficients and error function 85 of previous steps. This variation is performed using a strategy that eventually approaches a minimum deviation. For example, a minimization algorithm based on the Levenberg-Marquardt technique can be used. Then, the algorithm is repeated (arrow 86), now using the varied model parameters 92 instead of the initial parameters.

In this manner, the model parameters (fit parameters) 92 are varied repeatedly in the loop represented by the arrow 86, until the deviation 95 satisfies a best-fit criterion (e.g. until the deviation is sufficiently minimized or until some other cut-off criterion is met).

Then, the final fit parameters 92 of the last step are used for calculating the semiconductor material quality parameters 91 (e.g. thicknesses $d_2$, $d_3$) via the quality-parameter map 82 as described above.

In this manner, the semiconductor material quality parameters 91 are determined by calculating a best-fit response 94 that sufficiently minimizes the deviation 95, i.e. such that the predicted response 94 of the physical model fits to the detected response 74. Since the algorithm takes into account the full waveform of the detected response 74 via the error function 85, and not just individual land-mark features, the result is stable and reliable by the fact that one accounts for each individual frequency component in the appropriate way, given by the physical model.

In alternative embodiments, the frequency-dependent index of refraction n(f) may alternatively also be replaced by another equivalent parameterization, e.g. the conductivity which is proportional to the index of refraction squared multiplied by frequency. Alternatively, also some other parameterization of the optically relevant properties of each layer can be used as fit parameters. For example, in a variation, the quality parameters 91 can be used directly as fit parameters. In another variation, the iterative method can be adapted to more than two layers. To this purpose, Eq (3) is generalised to more than 2 layers, which is straightforward textbook knowledge. In another variation, additional input parameters may be used (e.g. the index of refraction of the surrounding medium, e.g. air, 42, 44).

In another variation, some parameters described as fitting parameters may be determined using additional sensors or input means. Thus, for example the thickness d2 of the semiconductor substrate (layer 2a) may be manually input, and the iterative method described herein may be used only for obtaining the thickness d3 of an additionally applied layer 2b.

Fig. 5 shows the as-measured time-domain waveform (electric field Er(t) plotted as a function of delay time t) of a semiconductor material having two layers (solid line). The semiconductor material is a bilayer system consisting of an epitaxial film on top of a substrate. Both materials are phosphorous doped silicon (i.e. electrons are the majority charge carriers). The top layer 2b is 0.1 mm thick and has $6 \cdot 10^{13}$ charge carriers per $cm^3$, and the substrate 2a is 0.5 mm thick and has $19 \cdot 10^{14}$ charge carriers per $cm^3$.

Further, Fig. 5 shows the corresponding reference spectrum (dashed-dotted line, "reference"), i.e. the emitted radiation signal not having interacted with the semiconductor material.

Further, Fig. 5 shows the best-fit predicted waveform (predicted response 94 obtained by the method of Fig. 4) to the data as a white-dotted line overlying the solid line ("fit"). From the best-fit parameters of the predicted waveform, the thickness d and the other quality parameters of each layer mentioned above (quality parameters 91 in Fig. 4) are obtained to high accuracy. The quality of the fit indicates the high accuracy of the Invention even for the case of only little difference and hence only little optical contrast between the layers, where other technologies such as infrared spectroscopy would fail.

This example of Fig. 5 shows a case where thickness and doping concentration levels are very proximate and thus also the optical contrast is low. The measured response signal (electrical field Er(t)) is shown in Fig. 5 and is a superposition of the direct reflection and internal reflections (see Fig. 3). In the time domain spectrum of Fig. 5 one can recognize a reflection of the front surface of the thin film, but the reflection from the other interfaces within the material are impossible to distinguish individually by the eye since many differently reflected partial waves are superimposed. It would therefore be impossible to use, e.g., a point-wise analysis or a deconvolution method for obtaining the geometrical and electrical parameters of the structure.

Fig. 6 illustrates the influence of the additional layer by showing a reflected time-domain electric field waveform both for (a) a semiconductor material having a single layer of thickness 500 $\mu$m (dashed line); and (b) a semiconductor material having two layers (solid line: one substrate 2a of thickness 500 $\mu$m as in (a), with an additional layer 2b of thickness 100 $\mu$m). Further, (c) the reference beam shape (dash-dotted line), identical to the one measured in Fig. 5, is shown. The curves (a) and (b) of Fig. 6 are based on simulations, rather than on actual measurements.

In Fig. 6, one can see the influence of the thin additional layer: Fig. 6 clearly shows differences in the shape of the waveforms depending on whether an additional layer is there (curve for (b)) or not (curve for (a)). These changes are a fingerprint of the additional layer, and the quality parameters of the additional layer can reliably be extracted using the method described herein in a well-determined and reliable manner.

Two differences are visible in Fig. 6: Firstly, the first peak (up to about 4.5 ps in Fig. 6) has the same shape, but slightly different overall magnitudes for both semiconductor materials (a) and (b). This first peak is mainly due to reflection on the front surface of the semiconductor material (indicated by reflection coefficient $r_{12}$ in Fig. 3). Hence, any difference in the first peak is mainly due to a difference in reflection coefficient $r_{12}$ but does not probe, beyond this reflection coefficient, the deeper inside structure of the layered semiconductor material.

Secondly, for later times (after about 4.5 ps), the curves for both semiconductor materials (a) and (b) differ from each other in a more complex manner that reflects the different (multiple) reflections and phase shifts within the layers of each of the semiconductor materials (a) and (b), as illustrated by the remaining beams of Fig. 3, and thus reflect the different (complex) reflectivities and transmittivities and thicknesses of each layer. Hence, these details are the fingerprint of the individual layers of the semiconductor material.

Fig. 7 illustrates the response signals for the semiconductor materials (a) and (b) of Fig. 6 as a function of frequency. In other words, the curves shown in Fig. 7 are Fourier transforms of the respective curves of Fig. 6. In the frequency-dependent form of Fig. 7, the differences between the two curves can be understood better: The multiple reflections as shown in Fig. 3 give rise to characteristic periodicities in the response signal which, in turn, allow inferring the layered structure of the semiconductor material responsible for these multiple reflections by the method illustrated in Fig. 4.

Further, as shown in Fig. 7, the differences between curves (a) and (b) are most significant only for frequencies below an upper threshold, e.g. in Fig. 7 for frequencies of less than about EF. This knowledge can be used for formulating an error term that captures the portion of the error that is most significant for the desired information. Hence, according to a preferred aspect the error term includes an error contribution being an $L^2$ norm of the difference between best-fit curve and response curve in frequency-space, the $L^2$ norm being cut-off at an upper frequency EF or being multiplied with a frequency-dependent weight function that vanishes abruptly or gradually above a characteristic frequency EF.

Fig. 8 is a diagram representing the real part of the conductivity, as a function of frequency f, of the respective two layers of the semiconductor material as extracted from the simulated curves of Figs. 6 and 7. The conductivity is proportional to $f*n(f)^2$, wherein n(f) is obtained from the simulated curves of Figs. 6 and 7 by the method illustrated in Fig. 4. The figure illustrates (i) the differences between the two layers (a) and (b) with respect to their low-frequency characteristics, and (ii) that these different low-frequency characteristics can be extracted from the THz response signal. The difference in frequency dependence of the conductivity between different layers guarantees that the fitting procedure described above converges and reproduces the quality parameters of film and substrate reliably.

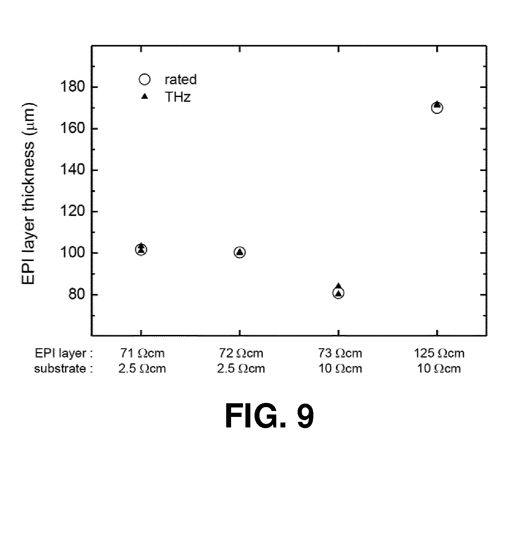

In the following, referring to Fig. 9, some layer thicknesses as determined by the algorithm as explained with respect to Fig. 4 are shown. The layer thicknesses are determined for four different semiconductor material stacks. Each of the four semiconductor samples is 200 mm in diameter and has two layers: a first layer being a doped phosphorous silicon substrate, and a second layer being an epitaxial film layer again of phosphorous doped silicon but of different doping concentration than the substrate. The corresponding dc resistivities of the sample layers are shown on the horizontal axis of Fig. 9. The fist (leftmost) semiconductor material corresponds to the semiconductor material whose data are shown in Fig.5.

On the vertical axis of Fig. 9 the thickness of the epitaxial film layer is shown. For each of the four samples, three thicknesses are shown: Namely, the rated thickness (obtained by a standard rated measurement) is shown by an open circle, the size of which corresponds to the error bar of the rated measurement ($\pm$ 2 microns). Further, for each sample, two THz measurements have been performed (one in the center, one in a corner of the surface), and the thickness has been obtained from each of the measurements by a method according to the invention as discussed herein (see in particular the description of Fig. 4). The thicknesses obtained in accordance with the invention are shown by solid triangles. It can be seen from Fig. 9 that the method described herein allows for determining the thickness both in a consistent manner (i.e. high reproducibility of the result) and in an accurate manner (within the error bars of the rated measurement). This is the case even for low optical contrast: For example, in the material corresponding to the rightmost sample, the doping concentration of the substrate differs from that of the epitaxial layer only by a factor 13 ($3.5 \cdot 10^{13}$ cm$^{-3}$ vs. $4.5 \cdot 10^{14}$cm$^{-3}$).

While the foregoing is directed to embodiments, other and further embodiments may be devised without departing from the basic scope determined by the claims.

## Claims

1. Method of characterizing a multi-layered semiconductor material (2) by a plurality of quality parameters based on fitting to a physical model, wherein
   the multi-layered semiconductor material (2) has at least a first layer (2a) and a second layer (2b), and wherein the plurality of quality parameters include at least one of a first layer thickness of the first layer (2a) and a second layer thickness of the second layer (2b),
   the method being carried out by a sensor system (1) in a non-contact manner, the sensor system comprising an emitter system (10) for emitting THz radiation, a detector system (20) for detecting THz radiation, and a processing unit (30) operationally coupled to the emitter system (10) and the detector system (20),
   the method comprising:

   - Emitting, by the emitter system (10), a THz radiation signal (60) towards the semiconductor material (2) such that the THz radiation interacts with the semiconductor material;
   - Detecting, by the detector system (20), a response signal (74) being the detected THz radiation signal (70) having interacted with the semiconductor material (2);
   - Determining model parameters of the physical model by optimizing the model parameters such that a predicted response signal of the physical model is fitted to the detected response signal, the model parameters being indicative of optical properties of the first layer (2a) describing the interaction of the THz radiation signal with the first layer and of optical properties of the second layer (2b) describing the interaction of the THz radiation signal with the second layer;
   - Determining, from the determined model parameters, the quality parameters.

2. The method according to claim 1, wherein the quality parameters further include at least one of a charge carrier concentration of the first layer (2a), a charge carrier mobility of the first layer (2a), a charge carrier scattering rate of the first layer (2a), a charge carrier concentration of the second layer (2b), a charge carrier mobility of the second layer (2b), and a charge carrier scattering rate of the second layer (2b).

3. The method according to claim 2, wherein all of the quality parameters are determined from a single response signal.

4. The method according to any one of the preceding claims, wherein at least one of the first layer (2a) and the second layer (2b) is doped.

5. The method according to any one of the preceding claims, wherein the emitted THz radiation signal (60) is at least one of

(i) a broadband signal having a frequency width of at least the frequency width $w_{fc}$ of the free-carrier absorption of at least one of the first layer (2a) and the second layer (2b); and
(ii) a radiation pulse having a length in time domain of at most $1/w_{fc}$.

6. The method according to any one of the preceding claims, wherein the emitter system (10) and the detector system (20) are arranged on the same side of the semiconductor material (2).

7. The method according to any one of the preceding claims, further comprising varying the temperature of the semiconductor material; and determining the quality parameters for a plurality of temperatures of the sample material.

8. The method according to any one of the preceding claims, further comprising inputting a reference signal sequence (72) in the physical model, wherein the reference signal sequence describes the emitted THz radiation signal not having interacted with the semiconductor material (2).

9. The method according to any one of the preceding claims, wherein the parameters of the physical model are fitted to the detected response signal by an iterative procedure (86) comprising the steps:

   (a) calculating a simulated response signal (94) based on the physical model using an initial guess for the model parameters (92, 93);
   (b) calculating an error function expressing a deviation (95) between the predicted response signal (94) and the detected response signal (74);
   (c) iterating steps (a) and (b), whereby the model parameters (92, 93) are varied until the error function satisfies a best-fit criterion,
   (d) obtaining the fitted parameters as the final parameters satisfying the best-fit criterion in step (c), and calculating at least one of the quality parameters from the fitted parameters (92, 93).

10. The method according to claim 10, wherein the error function has a frequency dependent sensitivity.

11. The method according to any one of the preceding claims, wherein the determined model parameters include a parameterization of the index of refraction of the first layer such that the index of refraction has a dependence on frequency, wherein the index of refraction preferably includes a frequency-dependent contribution describing a resonance peak, and wherein the frequency-dependent contribution is particularly preferably expressable as

$$\omega_p{}^2 / (-\omega^2 - i\gamma\omega),$$

wherein $\omega$ is the frequency, $\omega_p$ is a plasma frequency, $\gamma$ is a damping coefficient, and i is the imaginary unit.

12. The method according to any one of the preceding claims, wherein the multi-layered semiconductor material (2) further has a third layer.

13. Method of processing a semiconductor material (2), wherein the semiconductor material comprises a first layer (2a) and a second layer (2b), the method comprising:

   - Characterizing the semiconductor material (2) using the method according to any one of the preceding claims;
   - Performing a semiconductor material processing step on the semiconductor material using at least one of the determined quality parameters as a process parameter.

14. Sensor system (1) for characterizing a semiconductor material (2), the sensor system comprising:

   - a holder for the semiconductor material;
   - an emitter system (10) for emitting THz radiation towards the semiconductor material held by the holder;
   - a detector system (20) for detecting THz radiation coming from the semiconductor material held by the holder; and
   - a processing unit (30) operationally coupled to the emitter system (10) and the detector system (20), wherein the sensor system (1) is configured for characterizing a semiconductor material by the method according to any one of the claims 1 to 12.

**15.** Apparatus for processing a semiconductor material (2), wherein the semiconductor material comprises a first layer (2a) and a second layer (2b) arranged in thickness direction of the semiconductor waver on top of the first layer, the apparatus comprising:

- the sensor system (1) according to claim 14;
- a semiconductor processing system operatively coupled to the sensor system for receiving the at least one quality parameter from the sensor system, and configured for performing a semiconductor processing step on the semiconductor material using the at least one quality parameter as a process parameter.

**FIG. 1**

**FIG. 2a**

**FIG. 2b**

**FIG. 3**

**FIG. 4**

FIG. 5

FIG. 6

**FIG. 7**

**FIG. 8**

**FIG. 9**

**Europäisches Patentamt**

**European Patent Office**

**Office européen des brevets**

# EUROPEAN SEARCH REPORT

Application Number

EP 13 17 0240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LLOYD-HUGHES J ET AL: "Spectroscopic determination of the doping and mobility of terahertz quantum cascade structures", JOURNAL OF APPLIED PHYSICS, AMERICAN INSTITUTE OF PHYSICS. NEW YORK, US, vol. 106, no. 9, 5 November 2009 (2009-11-05), pages 93104-93104, XP012127753, ISSN: 0021-8979, DOI: 10.1063/1.3247973 * II. TRANSMISSION MEASUREMENTS AND MODEL; figures 1,2,3 * | 1-15 | INV. G01N21/35 G01B7/06 |
| A | ZHANG X ET AL: "Terahertz dielectric response and optical conductivity of n-type single-crystal ZnO epilayers grown by metalorganic chemical vapor deposition", JOURNAL OF APPLIED PHYSICS, AMERICAN INSTITUTE OF PHYSICS. NEW YORK, US, vol. 107, no. 3, 1 February 2010 (2010-02-01), pages 33101-33101, XP012133272, ISSN: 0021-8979, DOI: 10.1063/1.3294650 * II. EXPERIMENTS, III. RESULTS AND DISCUSSION; figures 1,2,3 * | 1-15 | |
| A | JAMES LLOYD-HUGHES ET AL: "A Review of the Terahertz Conductivity of Bulk and Nano-Materials", JOURNAL OF INFRARED, MILLIMETER, AND TERAHERTZ WAVES, SPRINGER US, BOSTON, vol. 33, no. 9, 31 May 2012 (2012-05-31), pages 871-925, XP035090760, ISSN: 1866-6906, DOI: 10.1007/S10762-012-9905-Y * the whole document * | 1-15 | TECHNICAL FIELDS SEARCHED (IPC) G01N G01B |

-/--

The present search report has been drawn up for all claims

| Place of search | Date of completion of the search | Examiner |
|---|---|---|
| The Hague | 1 August 2013 | Zwerger, Markus |

EPO FORM 1503 03.82 (P04C01)

Europäisches
Patentamt

European
Patent Office

Office européen
des brevets

# EUROPEAN SEARCH REPORT

Application Number

EP 13 17 0240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2011 085412 A (SONY CORP) 28 April 2011 (2011-04-28) * figures 1,7,8 * ----- | 1-15 | |
| A | JP 2002 243416 A (TOCHIGI NIKON CORP; NIPPON KOGAKU KK) 28 August 2002 (2002-08-28) * figures 1,3,6 * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 1 August 2013 | Zwerger, Markus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                EP 13 17 0240

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2013

| Patent document cited in search report | Publication date | Patent family member(s) | Publication date |
|---|---|---|---|
| JP 2011085412 A | 28-04-2011 | NONE | |
| JP 2002243416 A | 28-08-2002 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001029436 A1
- DE 102010021476 A1